# EUROPÄISCHE PATENTSCHRIFT

(11) **EP 1 174 626 B1**
(45) Veröffentlichungstag und Bekanntmachung des Hinweises auf die Patenterteilung: **22.09.2004**
(21) Anmeldenummer: 01810686.4
(22) Anmeldetag: 09.07.2001
(51) Int. Cl.: F16B 37/12, F16B 13/00

(54) **Befestigungselement**
Fastening element
Elément de fixation

(30) Priorität: 17.07.2000 DE 10034740
(43) Veröffentlichungstag der Anmeldung: 23.01.2002
(73) Patentinhaber: HILTI Aktiengesellschaft, 9494 Schaan (LI)
(72) Erfinder: Forster, Hubert, 82272 Moorenweis (DE)
(74) Vertreter: Wildi, Roland

(56) Entgegenhaltungen:
- DE-A- 1 575 180
- GB-A- 2 199 106
- GB-A- 2 240 828
- US-A- 5 630 688

## Beschreibung

Die Erfindung betrifft ein Befestigungselement für harte Untergründe, insbesondere Beton oder dergleichen, mit einem zylinderförmigen Grundkörper, dessen Aussenseite zumindest teilweise ein selbstschneidendes Gewinde aufweist, wobei der Grundkörper ein innenliegendes Angriffsmittel für Werkzeuge und ein entgegen der Setzrichtung offen ausgebildetes innengewinde ein entgegen der aufweist.

Befestigungselemente der oben genannten Art dienen vor allem der Befestigung im Mauerwerk. Da jedoch die Ausbildung des Befestigungselementes schraubenartig ist, kann dieses universell eingesetzt werden. Als Untergründe sind vor allem Beton, Kalkstein, Vollziegel, PVC, Metall, Holz oder dergleichen geeignet. Das Befestigungselement wird in den mit einem Bohrloch versehenen Untergrund eingeschraubt Dadurch dass der Grundkörper ein Innengewinde aufweist, ist die Verwendung von beliebigen Schrauben zum Verbinden möglich. Somit können die zur Anwendung gelangenden Schrauben je nach Anforderung der Anwendung gewählt werden.

Ausserdem ist das Innengewinde bei einer Überbeanspruchung des Angriffsmittels durch das zur Anwendung gelangende Werkzeug vor einer Beschädigung geschützt

Zudem ermöglicht eine örtliche Trennung des Innengewindes und des Angriffsmittels eine unabhängige, freie Gestaltung der Innenkontur der beiden Bereiche.

Aus der DE-U-29720751 ist ein Befestigungselement bekannt, das einen zylinderförmigen Grundkörper mit an dessen Aussenseite angeordnetem selbstschneidenden Gewinde aufweist. Der Grundkörper weist am setzungsseitig abgewandten Ende ein innenliegendes Angriffsmittel für ein zur Anwendung gelangendes Werkzeug auf. Mittels des Werkzeuges wird das Befestigungselement in Drehung versetzt und schneidet mit dem Gewinde ein dazu komplementäres Gewinde in den Untergrund.

Nachteilig an der bekannten Lösung ist, dass für unterschiedliche Anwendungen nur ein bestimmter Schraubenkopf und/oder Schraubenschaft zur Verfügung steht. Je nach Anwendung variieren beispielsweise die Anforderungen an die Festigkeit, die Leitfähigkeit, die Elastizität oder die Aussenkontur der Schraube

Die DE 15 75 180 A zeigt beispielsweise ein Befestigungselement für weiche Untergründe, wie Holz, Kunststoff oder dgl., mit einem zylindrischen Grundkörper, dessen Aussenseite ein selbstschneidendes Gewinde aufweist, wobei der Grundkörper ein innenliegendes Angriffsmittel für Werkzeuge und ein entgegen der Setzrichtung offen ausgebildetes Innengewinde aufweist. Um ein Verkanten beim Eindrehen in den weichen Untergrund des Befestigungselementes zu verhindern und somit die Handhabung des Befestigungselementes zu verbessern, ist der Aussendurchmesser des selbstschneidenden Aussengewindes oder der Grundkörper in Setzrichtung hin abnehmend ausgebildet. In einer Variante dazu wird die Handhabung des Befestigungselementes mittels einer variierenden Ausgestaltung des selbstschneidenden Aussengewindes verbessert.

Nachteilig an dieser bekannten Lösung ist, dass bei der Anwendung des Befestigungselementes in harten Untergründen die beschriebene verbesserte Handhabung des Befestigungselementes nicht mehr gegeben ist. Zudem bedingen die dargelegten Ausgestaltungen des Befestigungselementes einen herstellungstechnischen Aufwand dar, welcher sich insb. bei einem Massenprodukt, wie es ein solches Befestigungselement darstellt, kostenmässig nachteilig auswirkt.

Die GB 2 199 106 A zeigt ein weiteres Befestigungselement zur Anwendung in weichen Untergründen, wie Kunststoff, Holz oder dgl., oder in metallischen Untergründen, wie z. B. Stahlbleche oder Aluminium, wobei die Untergründe eine Dickenerstreckung aufweisen, die geringer als die Längserstreckung in Setzrichtung des Befestigungselementes ist. Das Befestigungselement ist vorzugsweise aus einem härteren Material als der Untergrund gefertigt. Das Befestigungselement hat einen zylindrischen Grundkörper, dessen Aussenseite ein selbstschneidendes Gewinde aufweist, wobei der Grundkörper ein innenliegendes Angriffsmittel für Werkzeuge und ein entgegen der Setzrichtung offen ausgebildetes Innengewinde aufweist.

Nachteilig an der bekannten Lösung ist, dass bei der Anwendung des Befestigungselementes in Sackbohrungen in harten Untergründen die einwandfreie Handhabung des Befestigungselementes nicht gegeben ist. Beim Eindrehen des Befestigungselementes in den harten Untergrund kann dieses Verkanten.

Der vorliegenden Erfindung liegt die Aufgabe zugrunde, ein Befestigungselement für Untergründe zu schaffen, das zur untergrundnahen Befestigung und zugleich für den Einsatz unterschiedlicher Anwendungen geeignet ist. Ferner soll das Befestigundselement einfach in der handhabung und wirtschaftlich herstellbar sein.

Erfindungsgemäß wird die Aufgabe dadurch gelöst, daß das Innengewinde entgegen der Setzrichtung anschliessend an das Angriffsmittel angeordnet ist, um beispielsweise die Verwendung von Innengewinden mit grossen Durchmessern zu ermöglichen. Ferner entspricht in dieser Ausführungsform die lichte Weite des Angriffsmittels mindestens der lichten Weite des Innengewindes, um ein Einführen des Werkzeuges ins Angriffsteil zu gewährleisten, was sich positiv auf die Handhabung des Befestigungselementes auswirkt.

Vorzugsweise entspricht die Längsausdehnung des Angriffsmittels und des Innengewindes der Dicke einer auf den Untergrund aufgebrachten Lattung, sodass das Ende des Befestigungselementes bündig mit der Oberfläche der Lattung ist. Vorteilhafterweise ist der Aussendurchmesser des Grundkörpers ohne das Gewinde im wesentlichen über die gesamte Länge konstant und erlaubt so einem Anwender des Befestigungselementes ein bündiges Setzen des Befestigungselementes zur Oberfläche des Untergrundes. Damit ist beispielsweise eine untergrundnahe Befestigung in einer wirtschaftlich attraktiven Art und Weise möglich.

Das Angriffsmittel wird in bevorzugter Weise durch eine zylinderförmige Bohrung mit unrunder Innenkontur gebildet, damit ein Formschluss zwischen Werkzeug und Befestigungsmittel zum Übertragen eines Drehmomentes besteht.

Vorzugsweise ist die Innenkontur mehrkantig ausgebildet, um eine einfache und dadurch wirtschaftliche Ausbildung des Werkzeuges zu ermöglichen. Ferner ermöglich eine mehrkantige Ausbildung ein einfaches Positionieren des Werkzeuges im Angriffsmittel.

Die Innenkontur ist vorteilhafterweise sechskantig ausgebildet, um ein gängiges Werkzeug zum Setzen anwenden zu können.

Aus Gründen der Festigkeit ist das Befestigungselement vorzugsweise aus Metall. Selbstverständlich kann, je nach Anforderung des Befestigungselementes, auch ein anderes Material, wie beispielsweise Kunststoff, Keramik oder dergleichen Anwendung finden.

Die Erfindung wird nachstehend anhand eines Ausführungsbeispieles näher erläutert. Es zeigen:
- Fig. 1: eine Frontsicht eines Befestigungselementes; zur Erläuterung der Erfindung
- Fig. 2: eine Seitenansicht des in Fig. 1 gezeigten Befestigungselementes;
- Fig. 3: eine Seitenansicht eines erfindungsgemässen Befestigungselementes, teilweise im Querschnitt.

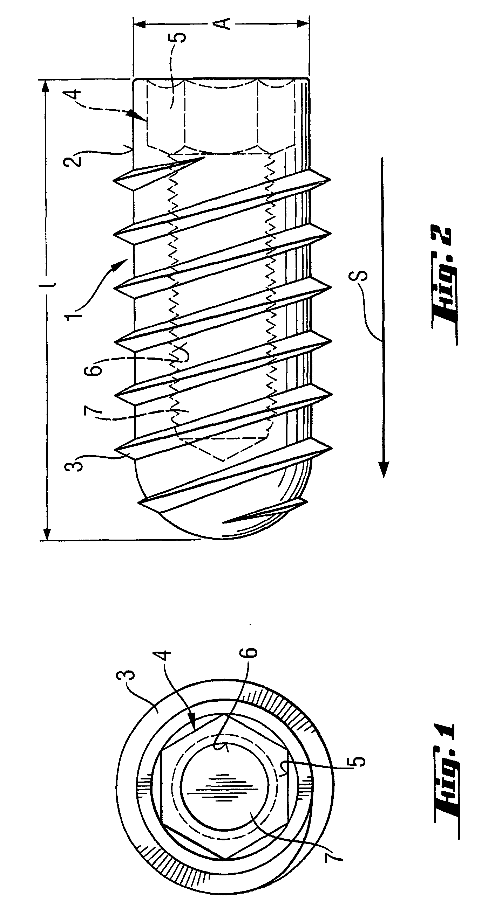

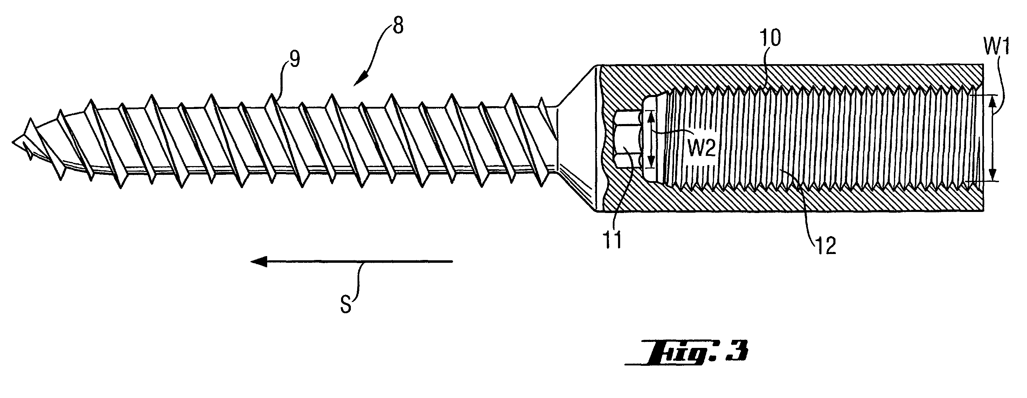

In den Fig. 1 und 2 ist ein Befestigungselement mit einem zylinderförmigen Grundkörper 1, dessen Aussenseite 2 ein selbstschneidendes Gewinde 3 aufweist, dargestellt. Der Grundkörper 1 weist am setzungsseitig abgewandten Ende ein innenliegendes Angriffsmittel 4 für ein zur Anwendung gelangendes, nicht dargestelltes, Werkzeug auf.

Entgegen einer Setzrichtung S weist der Grundkörper 1 eine offen ausgebildete Bohrung 7 auf, die teilweise mit einem Innengewinde 6 versehen ist, wie dies insbesondere aus Fig. 1 ersichtlich ist. Das Angriffsmittel 4 weist eine sechskantige Innenkontur 5 auf, deren lichte Weite grösser ist als die des, anschliessend an das Angriffsmittel 4 in Setzrichtung S angeordnete, Innengewindes 6.

Der Grundkörper 1 weist ohne Gewinde 3 im wesentlichen über seine gesamte Länge I einen konstanten Aussendurchmesser A auf. Das zackenförmige Gewinde 3, wie dies insbesondere aus Fig. 2 ersichtlich ist, schneidet in ein nicht dargestelltes Bohrloch ein zum Gewinde 3 des Grundkörpers 1 komplementäres Gewinde. Das setzungsseitige Ende des Grundkörpers 1 ist kalottenförmig ausgebildet um ein leichteres Einführen ins Bohrloch sicherzustellen.

Die Fig. 3 zeigt ein erfindungsgemässes Befestigungsmittel mit einem zylinderförmigen Grundkörper 8, dessen Aussenseite 2 teilweise ein selbstschneidendes Gewinde 9 aufweist. Der Grundkörper 8 weist eine entgegen der Setzrichtung S offen ausgebildete Bohrung 12 mit einem Innengewinde 10 auf. In Setzrichtung S schliesst an das Innengewinde 10 ein Angriffsmittel 11 an, das beispielsweise als Sechskant ausgebildet ist. Die lichte Weite W2 des Angriffsmittel 11 ist kleiner ausgebildet als die lichte Weite W1 des Innengewindes 10.

## Patentansprüche

1. Befestigungselement für harte Untergründe, insbesondere Beton oder dergleichen, mit einem zylinderförmigen Grundkörper (8), dessen Aussenseite zumindest teilweise ein selbstschneidendes Gewinde (9) aufweist, wobei der Grundkörper (8) ein innenliegendes Angriffsmittel (11) für Werkzeuge und ein entgegen der Setzrichtung (S) offen ausgebildetes Innengewinde (10) aufweist, **dadurch gekennzeichnet, dass**
das innengewinde (10) entgegen der Setzrichtung (S) anschliessend an das Angreffsmittel (11) angeordnet ist.

2. Befestigungselement nach Anspruch 1, **dadurch gekennzeichnet, dass** die lichte Weite des Innengewindes (10) mindestens der lichten Weite des Angriffsmittels (4,11) entspricht.

3. Befestigungselement nach einem der Ansprüche 1 oder 2, **dadurch gekennzeichnet, dass** der Aussendurchmesser des Grundkörpers (8) ohne das Gewinde (9) im wesentlichen über seine gesamte Länge konstant ist.

4. Befestigungselement nach einem der Ansprüche 1 bis 3, **dadurch gekennzeichnet, dass** das Angriffsmittel (11) durch eine zylinderförmige Bohrung mit unrunder Innenkontur gebildet wird.

5. Befestigungselement nach Anspruch 4, **dadurch gekennzeichnet, dass** die Innenkontur mehrkantig ausgebildet ist.

6. Befestigungselement nach Anspruch 4, **dadurch gekennzeichnet, dass** die Innenkontur sechskantig ausgebildet ist.

7. Befestigungselement nach einem der Ansprüche 1 bis 6, **dadurch gekennzeichnet, dass** das Befestigungselement aus Metall ist.

## Claims

1. Fastening element for hard bases, in particular concrete or the like, with a cylindrical base (8) the outside of which comprises at least partially a self-cutting thread (9), and the base (8) comprises an internal engaging means (11) for tools and an inside thread (10) which is open against the setting direction (S), **characterised in that** the inside thread (10) is arranged against the setting direction (S) adjacent the engaging means (11 ).

2. Fastening element according to Claim 1, **characterised in that** the clear width of the inside thread (10) corresponds at least with the clear width of the engaging means (4, 11).

3. Fastening element according to one of Claims 1 or 2, **characterised in that** the outside diameter of the base (8) without the thread (9) is substantially constant over its entire length.

4. Fastening element according to one of Claims 1 to 3, **characterised in that** the engaging means (11) is formed by a cylindrical bore with non-circular inside contour.

5. Fastening element according to Claim 4, **characterised in that** the inside contour is multi-edged by design.

6. Fastening element according to Claim 4, **characterised in that** the inside contour is hexagonal by design.

7. Fastening element according to one of Claims 1 to 6, **characterised in that** the fastening element is made of metal.

## Revendications

1. Élément de fixation pour supports durs, en particulier béton ou analogue, avec un corps de base cylindrique (8) dont le côté extérieur comporte au moins partiellement un filetage autotaraudeur (9), le corps de base (8) comportant un moyen d'application intérieur (11) pour des outils et un taraudage (10) de conception ouverte à l'opposé de la direction de scellement (S), **caractérisé en ce que** le taraudage (10) est disposé à l'opposé de la direction de scellement (S) à la suite du moyen d'application (11).

2. Élément de fixation selon la revendication 1, **caractérisé en ce que** l'ouverture libre du taraudage (10) correspond au moins à l'ouverture libre du moyen d'application (4, 11).

3. Élément de fixation selon une des revendications 1 ou 2, **caractérisé en ce que** le diamètre extérieur du corps de base (8) sans le filetage (9) est sensiblement constant sur toute sa longueur.

4. Élément de fixation selon une des revendications 1 à 3, **caractérisé en ce que** le moyen d'application (11) est formé par un trou cylindrique à contour intérieur non rond.

5. Élément de fixation selon la revendication 4, **caractérisé en ce que** le corps intérieur est de conformation polygonale.

6. Élément de fixation selon la revendication 4, **caractérisé en ce que** le contour intérieur est de conformation hexagonale.

7. Élément de fixation selon une des revendications 1 à 6, **caractérisé en ce que** l'élément de fixation est en métal.
